# EUROPEAN PATENT APPLICATION

(11) **EP 2 605 470 A1**
(43) Date of publication of application: **19.06.2013**
(21) Application number: 11306647.6
(22) Date of filing: 13.12.2011
(51) Int. Cl.: H04L 29/06, H04L 12/70, H04W 28/16

(54) **Network Entity, System, Method and Computer Program for Streaming Data**

(71) Applicant: Alcatel Lucent, 75007 Paris (FR)
(72) Inventor: Rusan, Andrei, 300298 Timisoara, Timis (RO)
(74) Representative: 2SPL Patentanwälte

(57) **Abstract**

Embodiments provide a network entity, a system, a method and a computer program for streaming data from a data source to a data destination. The network entity 10 comprises a source interface 12 for receiving the streaming data from the data source 200 and a destination interface 14 for transmitting the streaming data to the data destination 300. The network entity further comprises a control interface 16 for communicating control information on a streaming service with a control entity 400 for the services of the data destination 300 and a controller 18 for controlling the source interface 12 and the destination interface 14 based on the control information.

## Description

Embodiments of the present invention relate to communication networks, more particularly but not exclusively to streaming services provided through or by mobile communication networks.

### Background

Demands for higher data rates for mobile services are steadily increasing. At the same time modern mobile communication systems as 3^{rd} Generation systems (3G) and 4^{th} Generation systems (4G) provide enhanced technologies, which enable higher spectral efficiencies and allow for higher data rates and cell capacities. Services provided by mobile communication systems make more and more use of packet data as, e.g., Voice over Internet Protocol (VoIP) services or streaming services. For these services, real time protocols have been developed, as, for example, the Real Time Protocol (RTP), the Real Time Control Protocol (RTCP), and the Real Time Streaming Protocol (RTSP), cf. Internet Engineering Task Force (IETF) published as Request For Comments (RFC) 2326. Real time services are mostly defined through a set of Quality of Service (QoS) parameters such as data rate requirements, delay tolerance, packet loss tolerance, etc.

### Summary

It is a finding of embodiments that provision of dynamic QoS for RTSP-based video services in Long Term Evolution (LTE) networks can further improve service quality. Furthermore, it is a finding that conventional QoS provision and the according establishment of transport bearers in a network may not take full advantage of available QoS functionalities, e.g. in an LTE network, when they are non-dynamic. Embodiments can be further based on the finding that such service provision in a network can be fully automatic, dynamic and transparent to the end-user. Furthermore, embodiments may make use of existing and standard network elements.

Embodiments are therefore based on the finding that network elements, such as LTE network elements, are supporting QoS and that their QoS support can be utilized once a streaming service is started. For example, in embodiments it may be identified when an RTSP video session is started, paused, or stopped by a user, corresponding signaling can be used to inform the appropriate network elements, and thus the needed resources to provide appropriate QoS for this type of service can be reserved or released. In some embodiments the according user rights can also be taken into account. In LTE, for example, this can be done by an Application Function (AF) as part of an embodiment.

It is a further finding that RTSP video streaming servers do not provide an AF, embodiments may therefore provide an AF for an RTSP video scenario for LTE. Embodiments can therefore be based on the finding that an AF implementation exists in the IP Multimedia System (IMS) but it has only Session Initiation Protocol (SIP) capabilities and cannot be used for RTSP video services. Moreover, no requirements are defined in IMS on how RTSP should be handled and there is no standardization of RTSP in IMS.

Embodiments may use a Session Border Controller (SBC) as RTSP-proxy and AF, and may therewith provide an AF for RTSP. Embodiments may make use of SBCs with RTSP functionality, i.e. embodiments may provide an SBC as RTSP-proxy for session routing and protecting the video serving infrastructure.

Moreover, embodiments may provide an SBC with an Rx interface, which can, for example, be used to query a 3^{rd} Generation Partnership Project (3GPP)-compliant Policy and Charging Rules Function (PCRF) to admit/reject sessions based on policies established by the service provider. Embodiments may provide the advantage that they may use SBCs, which are commercially used network elements found in most commercial networks. Embodiments may therefore not violate any standards or compatibility, but can make use of existing elements in a new configuration/setup and extend the capabilities of the system as a whole. Embodiments may combine the proper network elements using a proper configuration, e.g. using an SBC in the LTE network architecture as RTSP-Proxy and AF.

Embodiments provide a network entity for forwarding streaming data from a data source to a data destination. The network entity comprises a source interface for receiving the streaming data from the data source and a destination interface for transmitting the streaming data to the data destination. The source interface may correspond to means for receiving the streaming data, as e.g. a network interface. The destination interface may correspond to means for transmitting the streaming data to the data destination, as e.g. the same or another network interface. Furthermore, the network entity comprises a control interface for communicating control information on a streaming service with a control entity for the services of the data destination. The control interface may correspond to means for communicating the control information with the control entity, e.g. the same network interface as the ones mentioned above or yet another network interface. The network entity further comprises a controller for controlling the source interface and the destination interface based on the control information. The controller may correspond to means for controlling the components of the network entity.

The destination interface can be operable to transmit the streaming data through a Radio Access Network (RAN) to the data destination and the control information can comprise information on network resources to be used to transport the streaming data through the RAN. The RAN can be part of a mobile communication system or network. The mobile communication system may, for example, correspond to one of the mobile communication systems standardized by the 3rd Generation Partnership Project (3GPP), as Universal Terrestrial Radio Access Network (UTRAN) or Evolved UTRAN (E-UTRAN), e.g. UMTS, a Global System for Mobile Communication (GSM) or Enhanced Data Rates for GSM Evolution (EDGE) network, a GSM/EDGE Radio Access Network (GERAN), Long-term Evolution (LTE) or LTE-Advanced (LTE-A), generally any system based on Code Division Multiple Access (CDMA), Single Carrier Orthogonal Frequency Division Multiplexing (SC-OFDM), Orthogonal Frequency Division Multiple Access (OFDMA), Frequency Division Multiple Access (FDMA), Time Division Multiple Access (TDMA), etc.

In embodiments the control entity can correspond to a Policy and Charging Rules Function (PCRF) of an access network. The access network can comprise one of the above listed mobile communication networks. In other words, the network entity and the control entity may exchange control information. In embodiments such control information may correspond to an event report, i.e. a report from the PCRF to the network entity or the AF, concerning transmission resources or requesting additional information. The PCRF may encompass policy control decisions and flow based charging control functionalities. The PCRF may provide network control regarding service data flow detection, gating, QoS and flow based charging towards a Policy and Charging Enforcement Function (PCEF). Moreover, the PCRF may apply security procedures, as required by the operator, before accepting service information from the AF. The PCRF may decide how a certain service data flow shall be treated in the PCEF, and ensure that a PCEF user plane traffic mapping and treatment is in accordance with a user's subscription profile. The PCRF may check that the service information provided by the AF is consistent with both the operator defined policy rules and the related subscription information as received from a Subscription Profile Repository (SPR) during IP-Connectivity Access Network (IP-CAN) session establishment before storing or acknowledging the service information. The service information can be used to derive the QoS for the service. In embodiments, the IP-CAN may correspond to one of the above listed mobile communication networks, comprising a core network and the respective RAN.

The PCRF may reject the request received from the AF when the service information is not consistent with either the related subscription information or the operator defined policy rules. As a result the PCRF may indicate that this service information is not covered by the subscription information or by operator defined policy rules. It may indicate, in response to the AF, the service information that can be accepted by the PCRF, e.g. the acceptable bandwidth.

Thus, in embodiments the controller can be operable to determine a service parameter from the control entity using the control interface, and the controller can be operable to adapt the receiving and the transmitting of the streaming data to the service parameter. Such a service parameter, which can be determined between the network entity and the PCRF, may correspond to information on one or more elements of the group of a data rate, a packet delay, an acknowledgement, a packet loss, a bearer priority, an allocation priority, a retention priority, a differentiated services codepoint, a packet forwarding priority or a dis- or negative acknowledgement. In embodiments the controller can be operable to establish an RTSP context with the data source using the source interface, and/or the controller can be operable to establish an RTSP context with the data destination using the destination interface. RTSP is a network control protocol designed for use in entertainment and communication systems to control streaming media servers. The protocol can be used for establishing and controlling media sessions between end points, i.e. the data source and the data destination, the data source and the network entity, and the network entity and the data destination, respectively. Clients of media servers may issue Video Cassette Recorder (VCR)-like commands, such as play and pause, or additional commands like describe, options, as available in RTSP, to facilitate real-time control of playback of media files from the server. The transmission of streaming data itself may not be a task of the RTSP protocol. Most RTSP servers use the Real-time Transport Protocol (RTP) for media stream delivery, however, some proprietary transport protocols are also known.

Hence, in embodiments the controller can be operable to establish an RTSP proxy server towards the data destination based on the streaming data of the data source. In embodiments such a proxy server can be a server, i.e. a computer system or an application that acts as an intermediary for requests from clients, i.e. from the data destination, seeking resources from other servers, i.e. the data source. A client may connect through the proxy server, i.e. the network entity, requesting a streaming service available from a different server, i.e. available from the data source. The proxy server may then evaluate the request according to predefined filtering rules. For example, it may filter traffic by IP address or protocol data. If the request is validated by the filter, the proxy provides the resource by connecting to the relevant server, i.e. the data source, and requesting the service on behalf of the client, i.e. the data destination. In embodiments, the network entity, as the proxy server, may optionally alter the data destination's, i.e. the client's request, or the server's, i.e. the data source's, response, and sometimes it may serve the request without contacting the specified server. In this case, it may 'cache' responses from the remote server, i.e. the data source, and it may return subsequent requests for the same content directly.

In embodiments the controller can be operable to establish a Session Border Controller (SBC) for the access network to the data destination. In embodiments, the SBC may exert control over the signaling and usually also the media streams involved in setting up, conducting, and tearing down streaming services, sessions, or interactive media communications. The SBC may be deployed on the borders between two service provider networks in a peering environment, i.e. between the access network, e.g. an LTE network, and the network with the data source. In some embodiments, this role can be expanded to include deployments between a service provider's access network, e.g. an E-UTRAN, and a backbone network, i.e. the data source, to provide service to users. Among the tasks of the SBC there may also be firewall functionality in terms of verifying passing data packets through packet inspection.

The controller can in some embodiments be operable to receive a streaming service request from the data destination and it can be operable to forward information on the streaming service request to the control entity, which may correspond to the above described PCRF.

The control information, which may then be received from the PCRF in return, may comprise information on whether the streaming service request is rejected or accepted. The controller can be operable to establish an RTSP- proxy for the data destination and an AF towards the control entity using the control interface. The application function is operable to provide a destination identity to the control entity, e.g. the PCRF, and receive information on a transport of the streaming data to the destination, e.g. parameters or an identification of an IP-CAN bearer through an E-UTRAN.

Embodiments may also provide a system for streaming video data. The system may comprise a data source, which comprises streaming data and a network entity according to the above description. The system further comprises an access network being operative for providing a transport service for the streaming data to the data destination. In embodiments the data source may correspond to a streaming data server, a camera, a video data server, an audio data server, a multimedia server, a streaming data encoder, a streaming data transcoder, a streaming broadcast source, or a video call streaming data source. In some embodiments the video call streaming data source can be based on a conference call, which can have active and passive participants. A passive participant can correspond to a participant who follows the conference and receives video and audio streaming data, but does not provide any video or audio data himself. A passive participant can correspond to the data destination, e.g. a streaming destination. In line with the above description the network entity can correspond to an SBC. The system can further comprise a PCRF entity being coupled to the access network and the SBC. Furthermore, the SBC may comprise an AF and an RTSP proxy.

Embodiments may further provide a method for forwarding streaming data from a data source to a data destination. The method comprises a step of receiving the streaming data from the data source and a step of transmitting the streaming data to the data destination. The method further comprises a step of communicating control information on a streaming service with a control entity for the services of the data destination and a step of controlling the receiving and the transmitting based on the control information. Embodiments may further provide a computer program having a program code for performing one of the above methods, when the computer program is executed on a computer, processor, or on a hardware component.

Embodiments may provide the advantage that dynamic QoS for streaming services, for example, RTSP in an LTE network, can be made available. Delivery of RTSP-based video to end-users as a differentiated service may be enabled with a higher end-user Quality-of Experience (QoE) through guaranteed video service quality. By enabling video as a service, embodiments may allow flexible user subscriptions and differentiated charging according to real-usage. Users may be able to get higher quality by paying a premium charge for it. In embodiments dynamic QoS may allow dynamic reservation and release of video resources according to needs, usage, or authorization of the respective users and therewith enable intelligent and reasonable use of network resources potentially leading to a higher system efficiency and capacity. Embodiments may provide improved optimization possibilities for the RTSP-based video services, taking advantage of advanced LTE QoS. Embodiments may improve user satisfaction for RTSP services, e.g. RTSP-based video services, Video-on-Demand (VoD), real-time video streaming, a variety of IP-Television (TV) flavors, real-time video surveillance, etc.

### Brief description of the Figures

Some other features or aspects will be described using the following non-limiting embodiments of entities or apparatuses and/or methods and/or computer programs by way of example only, and with reference to the accompanying figures, in which
Figure 1 shows an embodiment of a network entity for forwarding streaming data;
Figure 2 shows another embodiment of a network entity in a system; and
Figure 3 shows a flow chart of an embodiment of a method for forwarding streaming data.

### Description of some Embodiments

In the following some components will be shown in multiple figures, where similar reference signs refer to similar components. Repetitive descriptions may be avoided for simplicity purposes.

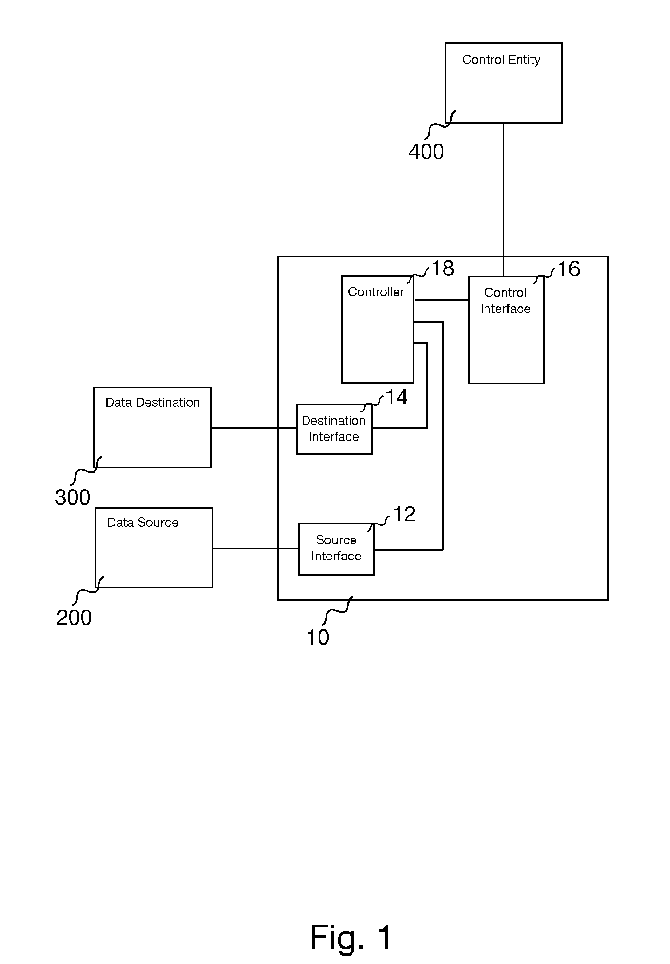

Figure 1 shows an embodiment of a network entity 10 for forwarding streaming data from a data source 200 to a data destination 300. The network entity 10 comprises a source interface 12 for receiving the streaming data from the data source 200 and a destination interface 14 for transmitting the streaming data to the data destination 300. As indicated in Figure 1 the source interface 12 can be coupled to the data source 200, e.g. by means of a network connection. In a similar way, the destination interface 14 can be coupled to the data destination 300, e.g. by means of the same or another network connection. Furthermore, the network entity 10 comprises a control interface 16 for communicating control information on a streaming service with a control entity 400 for the services of the data destination 300. As shown in Figure 1 the control interface 16 can be coupled to the control entity 400, e.g. by means of a network connection. The network entity 10 further comprises a controller 18 for controlling the source interface 12 and the destination interface 14 based on the control information. The controller 18 is coupled to the control interface 16, the destination interface 14, and the source interface 12.

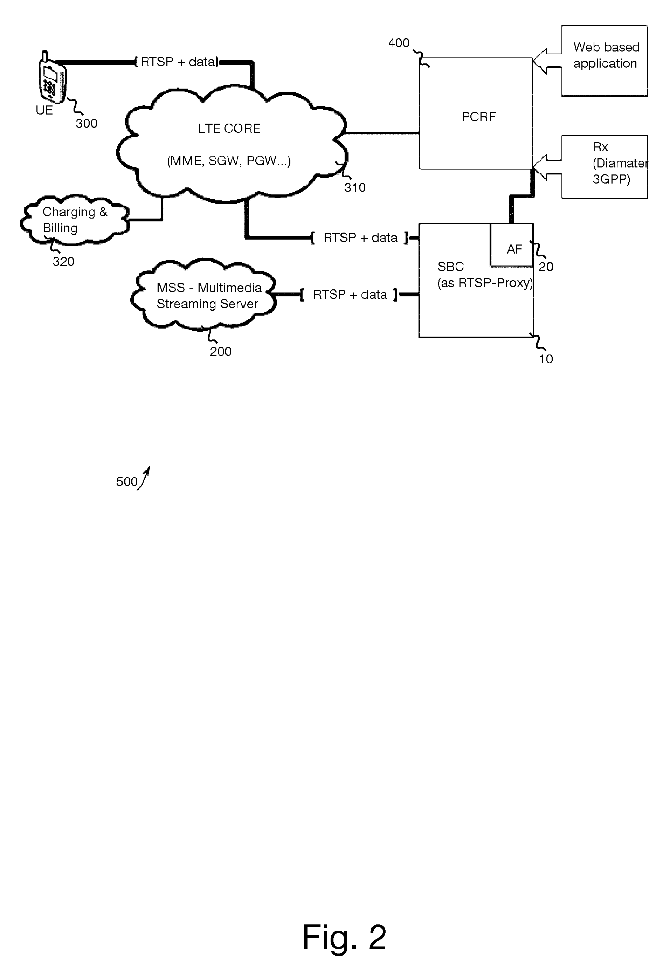

Figure 2 shows another embodiment of a network entity 10 in a system 500 for streaming video data. In order to keep a better overview in Figure 2, the embodiment of the network entity 10 is not as detailed as in Figure 1. It is assumed that the embodiment of the network entity 10 in Figure 2 comprises similar components as shown in Figure 1. The system 500 comprises a data source 200 comprising streaming data and an access network 310 being operative to provide a transport service for the streaming data to the data destination 300. Generally, the data source 200 may correspond to any streaming data source, such as, for example, a streaming data server, a camera, a video data server, an audio data server, a multimedia server, a streaming data encoder, a streaming data transcoder, a streaming broadcast source, a video call streaming data source. In Figure 2 the data source 200 is implemented as a Multimedia Streaming Server (MSS).

Moreover, in Figure 2 the embodiment of the network entity 10 is implemented as an SBC 10 and the control entity 400 is implemented as a PCRF, which is coupled to the access network 310 and the SBC 10. The SBC 10 comprises an AF 20 and an RTSP proxy server. At the PCRF 400 a Receive (Rx) or Diameter interface, cf. IETF RFC 3589, can be used for communicating the control information with the SBC 10. Figure 2 also indicates the conventional interface of the PCRF 400 for web based application, which enables manual configuration of transport bearers for the LTE core 310 to the data destination 300.

In the embodiment shown in Figure 2 the destination interface 14 is operable to transmit the streaming data through the access network 310 to the data destination 300. In the embodiment the access network comprises a RAN, which is assumed to be an LTE, together with an LTE core network, e.g. comprising a Mobility Management Entity (MME), a Serving GateWay (SGW), a Packet data GateWay (PGW), etc. Moreover, the LTE network is coupled to a charging and billing entity 320, which tracks charging and billing information for the users of the network 310. Moreover, Figure 2 shows that the data destination 300 is assumed to be a User Equipment (UE) 300, which can correspond to a smart phone, a laptop computer, a Personal Digital Assistant (PDA), etc.

In the embodiment shown in Figure 2 the control entity 400 corresponds to a PCRF of the access network 310. The control information comprises information on network resources to be used to transport the streaming data through the access network 310. The controller 18 is operable to determine a service parameter from the control entity 400 using the control interface 16. The controller 18 is operable to adapt the receiving and the transmitting of the streaming data to the service parameter. For example, the network entity receives a request from the UE 300 for a video streaming service having a data rate of 100kbps, where the data rate can be obtained from the data source, for example, by means of the Session Description Protocol (SDP). Such a request can, for example, be sent by the UE 300 using the RTSP. The network entity 10 may forward the request to the data source 200, which is implemented as Multimedia Streaming Server (MSS) in Figure 2. Once the data source 200 has acknowledged the general availability of the service, it may respond with information about the service, e.g. using the SDP, and the network entity 10 forwards information on the request to the PCRF 400 using the control interface 16. As part of the control information the PCRF 400 may then acknowledge that the data destination 300, e.g. a certain user, can be served in line with the request. The network entity 10 then adapts the reception of the streaming data from the data source 200 and the transmission of the streaming data to the data destination 300 to the data rate of 100kbps.

In yet another embodiment a video streaming service with a data rate of 200kbps may be requested and upon acknowledgement of the PCRF 400, the network entity 10 adapts the reception of the streaming data from the data source 200 and the transmission of the streaming data to the data destination 300 to the data rate of 200kbps. The service parameter can correspond to one or more elements of the group of a data rate, a packet delay, an acknowledgement, or a dis-acknowledgement. In other words, the control information may comprise an acknowledgement from the PCRF 400 on whether the service request is granted or a dis-acknowledgement when the service request is rejected. A service rejection may have several reasons, as e.g. the capacity or instant capacity of the access network 310, the user policy, i.e. whether the requesting user is allowed or has the right to consume the service, etc. That is to say, the controller 18 is operable to receive a streaming service request from the UE 300 and to forward information on the streaming service request to the PCRF 400. The control information, which is received from the PCRF 400 in return, comprises information on whether the streaming service request is rejected or accepted.

In the embodiment of Figure 2 the controller 18 is operable to establish an RTSP context with the MSS 200 using the source interface 12. The controller 18 is also operable to establish an RTSP context with the UE 300 though the LTE network 310 using the destination interface 14. Thus, the network entity 10 can be seen as a proxy server for the UE 300. Hence, the controller 18 is operable to establish an RTSP proxy server towards the UE 300 based on the streaming data of the MSS 200. Moreover, the network entity 10 establishes an SBC, i.e. the controller 18 is operable to establish the SBC for the LTE network 310 to the UE 300. Hence, the controller 18 is operable to establish an RTSP proxy for the UE 300 and an AF 20 towards the PCRF 400 using the control interface 16. The AF 20 is operable to provide a destination identity to the PCRF 400 and to receive information on a transport of the streaming data to the UE 300. The information on the transport of the streaming data corresponds to the parameters of the bearer service, i.e. the protocol context, which is provided by the LTE network 310.

Figure 2 illustrates the setup of an RTSP streaming service in an LTE network 310, where the streaming data is provided by an RTSP streaming server 200. The transfer of the RTSP protocol data and the actual video streaming data is indicated by the connections interrupted by "RTSP + data" in Figure 2.

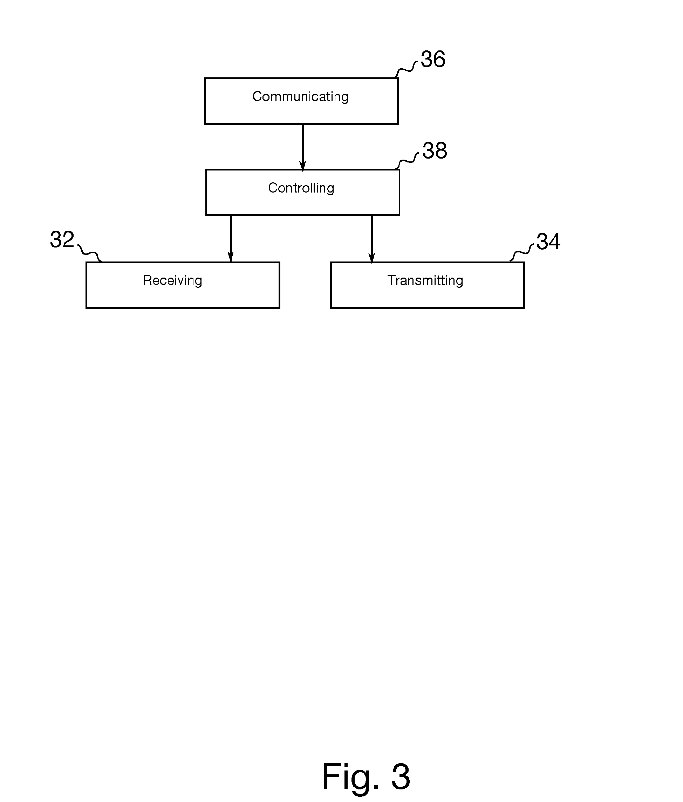

Figure 3 shows a flow chart of an embodiment of a method for forwarding streaming data. The method comprises a step of communicating 36 control information on a streaming service with a control entity 400 for the services of the data destination 300 and a step of controlling 38 the further steps of receiving 32 and transmitting 34 based on the control information. The further steps of receiving 32 the streaming data from the data source 200 and transmitting 34 the streaming data to the data destination 300 are also shown in Figure 3. Embodiment may further provide a computer program having a program code for performing one of the above described methods, when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for receiving", "means for transmitting", "means for communicating", "means for controlling", etc., may be provided through the use of dedicated hardware, such as "a receiver", "a transmitter", "a communicator", "a controller", "a processor", "a DSP", etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A network entity (10) for forwarding streaming data from a data source (200) to a data destination (300), comprising
a source interface (12) for receiving the streaming data from the data source (200);
a destination interface (14) for transmitting the streaming data to the data destination (300);
a control interface (16) for communicating control information on a streaming service with a control entity (400) for the services of the data destination (300); and
a controller (18) for controlling the source interface (12) and the destination interface (14) based on the control information.

2. The network entity (10) of claim 1, wherein the destination interface (14) is operable to transmit the streaming data through a radio access network (310) to the data destination (300) and wherein the control information comprises information on network resources to be used to transport the streaming data through the radio access network (310).

3. The network entity (10) of claim 1, wherein the control entity (400) corresponds to a policy and charging rules function of an access network (310).

4. The network entity (10) of claim 1, wherein the controller (18) is operable to determine a service parameter from the control entity (400) using the control interface (16), and wherein the controller (18) is operable to adapt the receiving and the transmitting of the streaming data to the service parameter.

5. The network entity (10) of claim 4, wherein the service parameter corresponds to one or more elements of the group of a data rate, a packet delay, an acknowledgement, or a dis-acknowledgement.

6. The network entity (10) of claim 1, wherein the controller (18) is operable to establish a real time streaming protocol context with the data source (200) using the source interface (12), or wherein the controller (18) is operable to establish a real time streaming protocol context with the data destination (300) using the destination interface (14).

7. The network entity (10) of claim 1, wherein the controller (18) is operable to establish a real time streaming protocol proxy server towards the data destination (300) based on the streaming data of the data source (200) and/or wherein the controller (18) is operable to establish a session border controller for an access network (310) to the data destination (300).

8. The network entity (10) of claim 1, wherein the controller (18) is operable to receive a streaming service request from the data destination (300) and to forward information on the streaming service request to the control entity (400), wherein the control information comprises information on whether the streaming service request is rejected or accepted.

9. The network entity (10) of claim 1, wherein the controller (18) is operable to establish a real time streaming protocol proxy for the data destination (300) and an application function (20) towards the control entity (400) using the control interface (16), the application function (20) being operable to provide a destination identity to the control entity (400) and to receive information on a transport of the streaming data to the data destination (300).

10. A system (500) for streaming video data, comprising
a data source (200) comprising streaming data;
a network entity (10) according to claim 1; and
an access network (310) being operative to provide a transport service for the streaming data to the data destination (300).

11. The system (500) of claim 10, wherein the data source (200) corresponds to a streaming data server, a camera, a video data server, an audio data server, a multimedia server, a streaming data encoder, a streaming data transcoder, a streaming broadcast source, or a video call streaming data source.

12. The system (500) of claim 10, wherein the network entity (10) corresponds to a session border controller (10) and wherein the system (500) further comprises a policy and charging rule function entity being coupled to the access network (310) and the session border controller (10).

13. The system (500) of claim 12, wherein the session border controller (10) comprises an application function (20) and a real time streaming protocol proxy server.

14. A method for forwarding streaming data from a data source (200) to a data destination (300), comprising
receiving (32) the streaming data from the data source (200);
transmitting (34) the streaming data to the data destination (300); communicating (36) control information on a streaming service with a control entity (400) for the services of the data destination (300); and
controlling (38) the receiving (32) and the transmitting (34) based on the control information.

15. A computer program having a program code for performing the method of claim 14, when the computer program is executed on a computer or processor.
